# EUROPEAN PATENT APPLICATION

(11) **EP 1 117 110 A2**
(43) Date of publication of application: **18.07.2001**
(21) Application number: 01100679.8
(22) Date of filing: 11.01.2001
(51) Int. Cl.: H01G 9/04

(54) **Fabrication method of solid electrolytic capacitor**

(30) Priority: 12.01.2000 JP 2000003428
(71) Applicant: NEC CORPORATION, Tokyo (JP)
(72) Inventor: Watanabe, Kazunori, Minato-ku, Tokyo (JP); Sato, Hideaki, Minato-ku, Tokyo (JP)
(74) Representative: Glawe, Delfs, Moll & Partner

(57) **Abstract**

A shaped member 1 having a predetermined configuration is formed by shaping powder of a valve metal under pressure (FIG. 1A), a sintered body 3 is formed by sintering the shaped member (FIG. 1B) and a pre-anodic oxidation film 9 is preliminarily formed on a surface of the sintered body 3 by electrochemical method (FIG. 1C) before a dielectric film 4 having a predetermined thickness is formed on the sintered body by anodic oxidation (FIG. 1D). The pre-anodic oxidation film 9 is formed by anodic oxidation or barrel chemical conversion to have a thickness larger than a thickness of an oxide film formed by natural oxidation (1 to 5 nm in a case of tantalum) and smaller than an oxide film 4.

## Description

### BACKGROUND OF THE INVENTION

### 1. Field of the Invention

The present invention relates to a fabrication method of a solid electrolytic capacitor and, particularly, to a surface processing method of an anode member in the form of a porous sintered body of a valve metal.

### 2. Description of the Prior Art

A fabrication method of a solid electrolytic capacitor having an anode of such a valve metal as tantalum is realized by forming a dielectric film on a surface of the anode in the form of a porous sintered body and forming a solid state electrolyte layer and a cathode layer on the dielectric film.

The dielectric film, which is indispensable for a capacitor, is formed by anodic oxidation of the anode member formed of a valve metal, that is, forming an anode oxide film (Ta₂O₅) having a predetermined thickness on the surface of the anode member by using anodic oxidation.

The present inventors have found that there is room for improvement on the leakage current characteristics of a solid electrolytic capacitor having an anode member formed according to the above mentioned conventional fabrication method and that the problem of the leakage current characteristics is due to natural oxidation (oxidation under condition in which chemical reaction energy is not supplied intentionally) of a sintered body in a custody during a time from a formation of the sintered body to a formation of the anode oxide film thereon by anodic oxidation.

That is, it is usual to perform the sintering step of, for example, tantalum at a temperature as high as 1200°C to 1600°C and lower than a melting point thereof. Therefore, the sintering is performed in a reduced pressure environment in the order of 1.33×10⁻⁴ Pa, in order to prevent the metal from being oxidized during the sintering.

Furthermore, in order to prevent gas phase natural oxidation of a sintered body from occurring by contact with air, the sintered body sintered in the sintering step is taken out from a sintering device after the temperature of the sintering device is lowered to, for example, 100°C or less and gas within the sintering device is replaced by inert gas such as argon or nitrogen. This is because it has been known that a tantalum oxide film formed by natural oxidation in gas phase by such as air contains more defects than those of a tantalum oxide film formed by electrochemical method such as anodic oxidation and the leakage current characteristics of a resultant capacitor is adversely affected by such defects.

However, even when the above mentioned procedures are taken in order to prevent natural oxidation of the sintered body during or immediately after the sintering step, it is unavoidable that a natural oxide film is formed on the sintered body in a time period from the end of the sintering step until a formation of a dielectric film by anodic oxidation. For example, when factories for fabricating capacitors are decentralized, there may a case where, when sintered bodies produced in a certain factory must be transported to another factory remote from the certain factory, a period of custody of the sintered bodies, which may be from several days to several weeks, is necessary. Even if there is no need of transporting the sintered bodies to such far location, there may be a case where the sintered bodies must be in the custody for several days as goods in stock when a processing capacity of the anodic oxidation step is different from that of the sintering step. The sintered bodies contact with oxygen in an atmospheric gas or air during the transportation or in the period of custody, so that natural oxidation proceeds.

The natural oxidation during transportation or custody degrades the leakage current characteristics of capacitors having sintered bodies, which are naturally oxidized. Further, depending upon the degree of oxidation, the sintered body may be decomposed by heat generated by oxidation and cannot be used in fabricating the anode member. When the sintered body is oxidized considerably, a custody canister thereof may be burned. Such spontaneous burning is so hard that it is impossible to use water to extinguish such spontaneous combustion since there is a risk of steam explosion. Therefore, it is necessary to other means for extinguishing fire by shutting out air with salt or sand.

The degree of influence of spontaneous combustion of sintered bodies during transportation or custody depends upon the number of sintered bodies in a canister, the density thereof in the canister, the amount of oxygen in the canister and/or the material of the canister, etc. However, it is a recent tendency that the frequency of spontaneous combustion and the adverse influence thereof are increased.

That is, the recent reduction of size and weight of electronic device is considerable, with which the reduction of size of a solid electrolytic capacitor and the increase of capacitance thereof are highly requested. In order to respond to such requests, it is usual to increase a capacitance value obtainable by a constant volume of a solid electrolytic capacitor by increasing a surface area of a constant volume of a sintered body thereof by using fine tantalum powder particles and increasing a capacitance for area by making a tantalum oxide film as an dielectric member thinner. This technique is referred to as HICV (High CV).

In the sintered body fabricated according to HICV, the possibility of spontaneous combustion thereof is higher than the conventional sintered body, since particle size of tantalum powder is finer and the surface area of the sintered body is larger enough to provide a larger contact area with air compared with the conventional technique.

When the thickness of natural oxide film on the sintered body is large, the anode oxide film grown thereon in the anodic oxidation step is influenced by defects of the sintered body. Even in a case where the influence of defects does not lead the sintered body to spontaneous combustion, the leakage current characteristics of the solid electrolytic capacitor using the same anode oxide film is degraded compared with the conventional capacitor.

### SUMMARY OF THE INVENTION

An object of the present invention is to provide a fabrication method of a solid electrolytic capacitor whose leakage current characteristics is improved by restricting excess growth of a natural oxide film in gas phase on a sintered body during a time from a completion of sintering to a start of an anodic oxidation step and preventing spontaneous combustion to thereby improve the safety of the sintered body in a custody.

The present invention is featured by performing a preliminary anodic oxidation as a preceding processing step for forming a dielectric film of a capacitor, in order to prevent the natural oxide film formed on the sintered body from becoming too thick.

That is, the fabrication method of an anode member for a solid electrolytic capacitor, in which a shaped member formed by shaping powder of a valve metal under pressure is sintered and the anode member is formed by forming an anodic oxidation film of the same metal as that of the sintered body on a surface of the sintered body, is featured by comprising, prior to the formation of the oxide film of the valve metal, the pre-anodic oxidation film forming step of preliminarily covering the surface of the sintered body with an oxide film of the same metal as that of the sintered body.

Particularly, according to the present invention, the fabrication method of the solid electrolytic capacitor comprises a shaped member forming step of shaping powder of a valve metal under pressure to form a shaped member having a predetermined shape, a sintering step of sintering the shaped member to form a sintered body, a step of forming a first anode member having a first anodic oxidation film formed on a surface of the sintered body by using an electrochemical processing device, an anodic oxidation step for forming a second anode member having a dielectric layer of the capacitor by forming a second anodic oxidation film on the first anode member after a predetermined time from a time at which the first anode member is derived from the electrochemical processing device, a step of forming a solid electrolytic layer on the dielectric layer of the second anode member and a step of forming a cathode layer on the solid electrolytic layer.

In the step of forming the first anode member of the above mentioned fabrication method, the first anodic oxidation film (pre-anodic oxidation film) is formed to have thickness larger than that of the natural oxide film existing on the surface of the sintered body.

When the metal having valve function is tantalum, it is preferable that the first anodic oxidation film is made thicker than 1 nm and thinner than 10 nm.

As the pre-anodic oxidation film-forming step, anodic oxidation or barrel chemical conversion may be used.

When the barrel chemical conversion is used, it is possible to form the pre-anodic oxidation film on surfaces of a plurality of sintered bodies by randomly putting the sintered bodies in an electrically conductive container formed with a plurality of holes and making the respective sintered bodies in contact with chemical conversion solution while rotating the container.

### BRIEF DESCRIPTION OF THE DRAWINGS

This and other objects, features and advantages of the present invention will become more apparent by reference to the following detailed description of the invention taken in conjunction with the accompanying drawings, in which:
FIG. 1A to FIG. 1E show cross sections of an anode member in respective fabrication steps according to the fabrication method of the present invention;
FIG. 2 illustrates an anodic oxidation method; and
FIG. 3 illustrates a barrel chemical synthesis method.

### DETAILED DESCRIPTION OF THE PREFERRED EMBODIMENTS

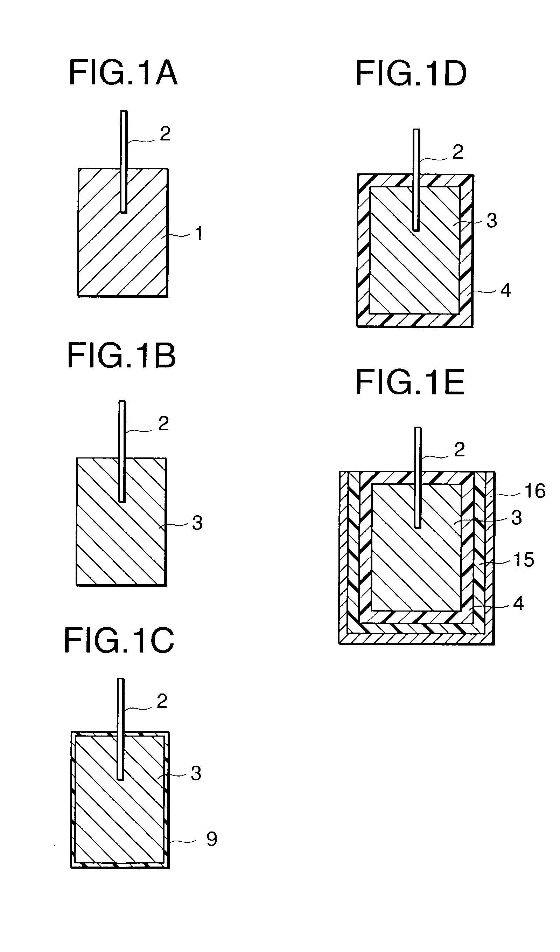

The first embodiment of the present invention when applied to a fabrication of an anode member for a tantalum solid electrolytic capacitor will be described with reference to FIG. 1A to FIG. 1E.

In the first embodiment, a pre-anodic oxidation film 9 is formed by using a general anodic oxidation step. As shown in FIG. 1A, a shaped member 1 in the form of a circular or polygonal pillar is formed by mixing tantalum powder and a binder, putting the mixture in a mold and pressing it. In forming the shaped member 1, a tantalum wire 2 is implanted in one end surface of the shaped member 1.

Then, as shown in FIG. 1B, the shaped member 1 is sintered at a temperature in a range from 1200°C to 1600°C under vacuum pressure of 1.33×10⁻⁴ Pa, resulting in a sintered body 3. This is the same as the conventional fabrication method.

Then, as shown in FIG. 1C, a tantalum oxide film (Ta₂O₅) is formed on a surface of the sintered body 3 by anodic oxidation as the pre-anodic oxidation film 9. The formation of the pre-anodic oxidation film 9 is performed by the same anodic oxidation used in forming a tantalum oxide film 4 as a dielectric member of the capacitor shown in FIG. 1D.

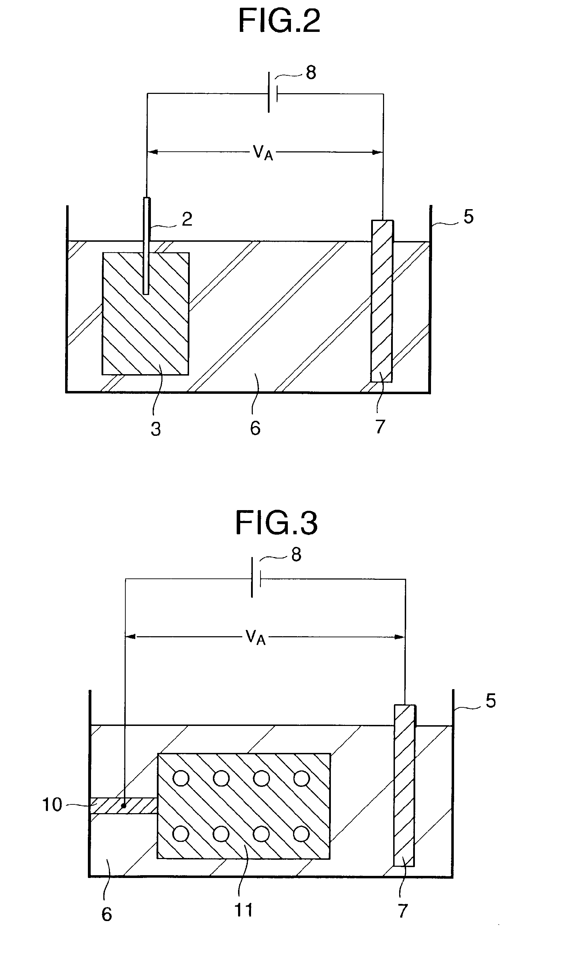

That is, as shown in FIG.2, the sintered body 3 is disposed in chemical conversion solution such as, for example, aqueous solution of phosphoric acid in opposing relation to an electrode 7 and a D.C. voltage, which is high, and a D.C. voltage, which is low, are applied to the tantalum wire 2 of the sintered body 3 and the electrode 7, respectively. Thickness of the tantalum pre-anodic oxidation film 9 to be formed must be larger than thickness of the tantalum oxide film formed by natural oxidation and smaller than thickness of the anodic oxidation film 4 as the dielectric member of the capacitor.

In general, thickness of the natural oxide film formed by gas phase reaction when temperature is constant is proportional to a square root of time and tends to be saturated after a relatively long time. It has been known that saturated thickness of the natural tantalum oxide film on the sintered body, when the latter member is put in air at room temperature for several days, is 5 nm. However, the thickness of the natural oxide film may be less than 1 nm when the sintered body is put in air at room temperature for in the order of 24 hours.

On the other hand, the chemical conversion voltage V_{A} applied in the anodic oxidation step (FIG. 1D) is determined by taking acceptable capacitance and leakage current characteristics of the resultant capacitor into consideration. However, it is usual to select the voltage such that the anodic oxidation film 4 as the dielectric member of the capacitor becomes 10 nm to 250 nm thick. Therefore, it is preferable to form the pre-anodic oxidation film 9 of tantalum such that it is thicker than the natural oxide film and thinner than the anodic oxidation film formed in the subsequent anodic oxidation film-forming step. More preferably, the pre-anodic oxidation film 9 of tantalum is thicker than 5 nm and thinner than 10 nm.

Since it has been known that the saturated thickness of the anodic oxidation film formed by anodic oxidation of tantalum per unit voltage is about 1.7 nm/volt, it is enough to select the chemical conversion voltage V_{A} in the pre-anodic oxidation film forming step shown in FIG. 1C in a range from about 3 V to about 6V. Under such condition, the pre-anodic oxidation film having the desired thickness is formed in the pre-anodic oxidation step for about 3 hours.

The case where only one sintered body is processed is shown in FIG. 2 in order to facilitate an understanding of a principle of anodic oxidation. In a practical fabrication, however, in order to improve the producibility of capacitor, it is usual that a number of sintered bodies are mounted on a metal flat belt by welding the tantalum wires 2 to the metal belt and the chemical conversion voltage is applied across the metal belt and the electrode 7, so that the sintered bodies are processed in one anodic oxidation step.

After the pre-anodic oxidation film 9 is formed on the surface of the sintered body 3 as mentioned above, the anodic oxidation film having predetermined thickness is formed by performing the original anodic oxidation step, which has been used to obtain the dielectric film thick enough for the capacitor. The thickness of the anodic oxidation film is determined such that a total thickness of the anodic oxidation film and the pre-anodic oxidation film becomes equal to the thickness of the dielectric film, which is, for example, 10 nm or more, as shown in FIG. 1D.

In such case, the thickness of the tantalum oxide film obtained by anodic oxidation is strictly determined by the chemical conversion voltage. Therefore, even when the pre-anodic oxidation film 9 is formed preliminarily, there is no obstacle against the formation of the tantalum oxide film 4 shown in FIG. 1D, provided that the pre-anodic oxidation film 9 is thinner than the tantalum oxide film 4. Further, since the pre-anodic oxidation film 9 is formed by intentionally supplying chemical reaction energy by electrochemical method, defect of the pre-anodic oxidation film 9 is small compared with the natural oxide film due to existence of air and the existence of the pre-anodic oxidation film in the capacitor does not influence adversely to the leakage current characteristics of the capacitor.

After the above mentioned steps, a solid electrolytic layer 15 of, for example, manganese dioxide or electrically conductive high molecular material is formed on the dielectric layer 4, that is, the anode member as shown in FIG. 1E and, further, a cathode layer 16 is formed by forming a graphite layer and a silver paste layer on the solid electrolytic layer in the order.

Thereafter, the tantalum wire 2 is welded to an external anode terminal and the cathode is adhered to an external cathode terminal by means of electrically conductive adhesive. The assembly is molded by epoxy resin (not shown) and, after the external terminals are put in order, the tantalum solid electrolytic capacitor is completed.

Now, the second embodiment of the present invention will be described with reference to FIG. 3. That is, in this embodiment, the pre-anodic oxidation film 4 shown in FIG. 1C is formed by using barrel chemical conversion. A plurality of sintered bodies 3 are randomly scattered in an electrically conductive container 11, which is formed with a plurality of holes and rotatable about an electrically conductive rotation shaft 10. The pre-anodic oxidation films 9 are electrochemically formed on surfaces of the sintered bodies by making the respective sintered bodies in contact with chemical conversion solution 6 while rotating the container 11.

According to the second embodiment, a custody space for holding the sintered bodies for a time from the formation of the pre-anodic oxidation film until the next anodic oxidation step (FIG. 1D) is small compared with the first embodiment. Since, in the first embodiment, a plurality of sintered bodies are mounted on the metal belt with a constant interval and the pre-anodic oxidation is performed as mentioned previously, the sintered bodies with the pre-anodic oxidation films formed thereon are kept in custody as they are, so that the custody space becomes large due to space between adjacent sintered bodies. According to the second embodiment using barrel chemical conversion, however, it is possible to reduce the space between adjacent sintered bodies since the sintered bodies are separated independently. For the same reason as this, it is possible to improve the producibility in the pre-anodic oxidation film-forming step.

When the barrel chemical conversion is used to form the pre-anodic oxidation film 9, there may be a case where the pre-anodic oxidation films 9 are scratched due to mutual contact of sintered bodies during the film formation. However, since the principle of the present invention resides on the reduction of contact area of the sintered body with air by forming the pre-anodic oxidation film 9, such scratches on the pre-anodic oxidation film 9 is harmless in view of the effect to be obtained by the present invention. Further, the sintered body to be processed by barrel chemical conversion may or may not have an anode lead preliminarily implanted thereon.

As described hereinbefore, according to the present invention, it is possible, in forming an anode of a solid electrolytic capacitor by shaping powder of metal having valve function under pressure to form a shaped member, sintering the shaped member and forming an oxide film of the same material as the material of the sintered body on the sintered body, to prevent excess natural oxidation of the sintered body in a time from the sintering until the anodic oxidation and to improve the leakage current characteristics of the capacitor. Further, since it is possible to prevent spontaneous combustion of the sintered body, it is possible to improve the safety during the custody or transportation of the sintered bodies.

## Claims

1. A fabrication method of a solid electrolytic capacitor comprising the steps of:
shaping powder of a valve metal under pressure to form a shaped member having a predetermined shape;
sintering said shaped member to form a sintered body;
forming a first anode member having a first anodic oxidation film formed on a surface of said sintered body by using an electrochemical processing device; and
forming a second anode member having a dielectric layer of said solid electrolytic capacitor by forming a second anodic oxidation film on said first anode member after a predetermined time from a time at which said first anode member is derived from said electrochemical processing device.

2. A fabrication method of a solid electrolytic capacitor, as claimed in claim 1, further comprising the steps of:
forming a solid electrolytic layer on said dielectric layer of said second anode member; and
forming a cathode layer on said solid electrolytic layer.

3. A fabrication method of a solid electrolytic capacitor, as claimed in claim 1, wherein, in the step of forming said first anode member, said first anodic oxidation film is formed to have thickness larger than that of a natural oxide film existing on said surface of said sintered body.

4. A fabrication method of a solid electrolytic capacitor, as claimed in claim 1, wherein said first anodic oxidation film is formed by anodic oxidation with said sintered body putting in chemical conversion solution.

5. A fabrication method of a solid electrolytic capacitor, as claimed in claim 1, wherein said first anodic oxidation film is formed by barrel chemical conversion.

6. A fabrication method of a solid electrolytic capacitor, as claimed in claim 3, wherein said metal having valve function is tantalum and said first anodic oxidation film is made thicker than 1 nm and thinner than 10 nm.

7. A fabrication method of a solid electrolytic capacitor, as claimed in claim 5, wherein said first anodic oxidation films are formed on surfaces of a plurality of said sintered bodies by randomly putting said sintered bodies in an electrically conductive container formed with a plurality of holes and making said respective sintered bodies in contact with chemical conversion solution while rotating said container.

8. A fabrication method of a solid electrolytic capacitor, as claimed in claim 1, wherein said predetermined time is 24 hours or longer.
